# DEMANDE DE BREVET EUROPEEN

(11) **EP 4 837 802 A1**
(43) Date de publication de la demande: **11.11.2026**
(21) Numéro de dépôt: 26176855.0
(22) Date de dépôt: 06.05.2026
(51) Int. Cl.: B60W 30/00

(54) **PROCÉDÉ DE RÉALISATION D'UNE MANOEUVRE DE CHANGEMENT DE VOIE SÉCURISÉE**

(30) Priorité: 06.05.2025 FR 2504795
(71) Demandeur: RENAULT s.a.s., 92100 Boulogne-Billancourt (FR)
(72) Inventeur: BOUABDALLAH, Salim, 78084 GUYANCOURT (FR)
(74) Mandataire: Renault Group

(57) **Abrégé**

Un aspect de l'invention concerne un procédé de réalisation d'une manœuvre de changement de voie sécurisée comportant une première phase pendant laquelle le véhicule (200) accélère pour se placer à une distance de sécurité d'un premier autre véhicule (201) arrivant par l'arrière, tout en conservant une distance de sécurité avec un deuxième autre véhicule (202) situé devant, et une deuxième phase pendant laquelle le véhicule (200) change de voie, comportant les étapes suivantes :
- Vérification qu'un ensemble de conditions permettant une manœuvre de changement de voie sécurisée est rempli, l'ensemble de conditions comportant des conditions relatives au véhicule (200) et à un environnement actuel du véhicule et des conditions relatives à la manœuvre à réaliser et à un environnement estimé du véhicule (200) à l'issue de la première phase de la manœuvre à réaliser ;
- Si l'ensemble de conditions est rempli, réalisation de la manœuvre par le véhicule (200).

## Description

### DOMAINE TECHNIQUE DE L'INVENTION

Le domaine technique de l'invention est celui des véhicules, et plus particulièrement celui des changements de voie réalisés par les véhicules.

La présente invention concerne un procédé de réalisation d'une manœuvre de changement de voie et en particulier un procédé de réalisation d'une manœuvre de changement de voie sécurisée. La présente invention concerne également un procédé de dépassement sécurisé, et un véhicule et un produit-programme d'ordinateur pour la mise en œuvre des procédés.

### ARRIERE-PLAN TECHNOLOGIQUE DE L'INVENTION

Pour réaliser une manœuvre de changement de voie vers une voie de circulation adjacente de manière sécurisée, la réglementation sur le changement de voie impose de respecter une distance minimale entre le véhicule réalisant la manœuvre et un véhicule situé sur la voie adjacente et arrivant par l'arrière dudit véhicule.

Par ailleurs, une distance minimale de sécurité est toujours imposée entre ledit véhicule et un véhicule cible situé devant ledit véhicule, en particulier pour limiter les risques de collision en cas de freinage d'urgence.

Ainsi, dans certains cas, typiquement dans le cas d'une circulation dense, la réalisation d'une manœuvre de changement de voie respectant la réglementation devient compliquée, la zone dans laquelle positionner le véhicule permettant à la fois de respecter la distance minimale par rapport au véhicule arrivant par l'arrière sur la voie adjacente, et la distance minimale par rapport au véhicule cible étant de faible étendue.

Il existe donc un besoin de pouvoir s'assurer qu'une manœuvre de changement de voie peut être réalisée de manière sécurisée et en respectant la réglementation de changement de voie.

### RESUME DE L'INVENTION

L'invention offre une solution aux problèmes évoqués précédemment, en permettant la réalisation d'une manœuvre de changement de voie sécurisée, même dans des situations de circulation dense.

Un premier aspect de l'invention concerne un procédé de réalisation d'une manœuvre de changement de voie sécurisée, mis en œuvre par un véhicule situé dans une première voie de circulation, la manœuvre de changement de voie comportant une première phase pendant laquelle ledit véhicule accélère pour se placer au moins à une distance de sécurité de manœuvre prédéfinie d'un premier autre véhicule situé dans une deuxième voie de circulation et arrivant par l'arrière dudit véhicule tout en conservant au moins une distance de sécurité finale prédéfinie avec un deuxième autre véhicule situé dans la première voie et devant ledit véhicule, et une deuxième phase pendant laquelle ledit véhicule passe de la première voie à la deuxième voie, le procédé comportant les étapes suivantes :
- Vérification qu'un premier ensemble de conditions permettant une manœuvre de changement de voie sécurisée est rempli, le premier ensemble de conditions comportant un premier sous-ensemble de conditions relatives audit véhicule et à un environnement actuel dudit véhicule et un deuxième sous-ensemble de conditions relatives à la manœuvre de changement de voie à réaliser et à un environnement estimé dudit véhicule à l'issue de la première phase de la manœuvre de changement de voie à réaliser, le premier ensemble de conditions dépendant d'un premier ensemble de paramètres liés :
   - audit véhicule ;
   - au premier autre véhicule ;
   - au deuxième autre véhicule ;
   - à un éventuel troisième autre véhicule situé dans la deuxième voie et devant ledit véhicule ; et
   - à un éventuel événement survenant sur la première voie et/ou la deuxième voie ;
- Si le premier ensemble de conditions est rempli, réalisation de la manœuvre de changement de voie par ledit véhicule.

Grâce à l'invention, la manœuvre de changement de voie n'est réalisée que si l'environnement du véhicule préalablement à la manœuvre, et un environnement estimé pour le véhicule à l'issue d'une première phase de la manœuvre consistant pour le véhicule à accélérer pour se placer à une distance de sécurité minimale d'un véhicule arrivant par l'arrière dans la voie adjacente, permettent de respecter des distances minimales de sécurité vis-à-vis des véhicules environnants et des événements pouvant survenir sur les voies de circulation.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Selon une variante de réalisation, le premier ensemble de paramètres comporte une vitesse actuelle dudit véhicule, une accélération maximale permise pour ledit véhicule, une vitesse relative du premier autre véhicule par rapport audit véhicule, une vitesse relative du deuxième autre véhicule par rapport audit véhicule, une vitesse relative du troisième autre véhicule par rapport audit véhicule, une distance entre le premier autre véhicule et ledit véhicule, une distance entre le deuxième autre véhicule et ledit véhicule, une distance entre le troisième autre véhicule et ledit véhicule, une vitesse maximale autorisée, une longueur du deuxième autre véhicule et/ou une distance entre ledit véhicule et l'événement.

Selon une variante de réalisation compatible avec la variante de réalisation précédente, le premier sous-ensemble de conditions n'est pas vérifié si le deuxième autre véhicule ou le troisième autre véhicule ralentit, ou si la distance entre le deuxième autre véhicule et ledit véhicule ou la distance entre le troisième autre véhicule et ledit véhicule est inférieure à une distance de sécurité initiale prédéfinie, et le deuxième sous-ensemble de conditions n'est pas vérifié si un temps de placement sécurisé correspondant au temps minimum nécessaire audit véhicule pour réaliser la première phase de la manœuvre de changement de voie est supérieur à un seuil de temps prédéfini, si une vitesse maximale de placement sécurisé correspondant à la vitesse maximale nécessaire audit véhicule pour réaliser la première phase de la manœuvre de changement de voie dans le temps de placement sécurisé est supérieure à une vitesse maximale autorisée, si une distance entre le deuxième autre véhicule et ledit véhicule ou une distance entre le troisième autre véhicule et ledit véhicule est inférieure à la distance de sécurité finale prédéfinie une fois que ledit véhicule a réalisé la première phase de la manœuvre de changement de voie, ou si une distance nécessaire à la réalisation de la manœuvre de changement de voie est supérieure à la distance entre ledit véhicule et l'événement.

Selon une variante de réalisation compatible avec les variantes de réalisation précédentes, l'étape de réalisation de la manœuvre est mise en œuvre automatiquement par une fonction de contrôle du positionnement du véhicule dans la voie implémentée sur ledit véhicule.

Ainsi, la manœuvre de changement de voie est réalisée automatiquement, sans intervention du conducteur, via des fonctions de sécurité implémentées sur le véhicule.

Selon une variante de réalisation compatible avec les variantes de réalisation précédentes, le procédé selon le premier aspect de l'invention comporte en outre, si le premier ensemble de conditions est rempli, une étape d'émission d'un message à l'intention d'un conducteur dudit véhicule, informant que la manœuvre de changement de voie peut être réalisée de manière sécurisée et/ou donnant des informations sur la manœuvre de changement de voie à réaliser.

Ainsi, le conducteur est informé qu'il se situe dans une zone lui permettant la réalisation d'une manœuvre de changement de voie sécurisée et/ou des étapes à mettre en œuvre pour réaliser une telle manœuvre.

Un deuxième aspect de l'invention concerne un procédé de dépassement sécurisé d'un véhicule cible par un véhicule, comportant les étapes du procédé selon le premier aspect de l'invention mises en œuvre par ledit véhicule, le véhicule cible correspondant au deuxième autre véhicule, le procédé comportant en outre les étapes suivantes :
- Vérification qu'un deuxième ensemble de conditions permettant un dépassement sécurisé est rempli, le deuxième ensemble de conditions dépendant d'un deuxième ensemble de paramètres liés audit véhicule, au deuxième autre véhicule, à un éventuel quatrième autre véhicule situé dans la première voie devant le deuxième autre véhicule et à l'éventuel événement ;
- Si le deuxième ensemble de conditions est rempli, réalisation par ledit véhicule, d'une manœuvre de dépassement du deuxième autre véhicule ;
- Si le deuxième ensemble de conditions n'est pas rempli, vérification qu'un troisième ensemble de conditions permettant une manœuvre de rabattement sécurisée dudit véhicule est rempli, le troisième ensemble de conditions dépendant d'un troisième ensemble de paramètres liés audit véhicule, au deuxième autre véhicule et à un éventuel cinquième autre véhicule situé dans la première voie derrière le deuxième autre véhicule ;
- Si le troisième ensemble de conditions est rempli, réalisation par ledit véhicule, d'une manœuvre de rabattement derrière le deuxième autre véhicule.

Ainsi, si à l'issue de la manœuvre de changement de voie réalisée les conditions ne sont pas remplies pour le dépassement sécurisé du véhicule cible, on évalue si les conditions sont remplies pour réaliser une manœuvre de rabattement sécurisée.

Selon une variante de réalisation, le deuxième ensemble de conditions n'est pas rempli si une distance nécessaire à la réalisation de la manœuvre de dépassement est supérieure à la distance entre ledit véhicule et l'événement.

Selon une variante de réalisation compatible avec la variante de réalisation précédente, le troisième ensemble de conditions n'est pas rempli si une distance entre le deuxième autre véhicule et le cinquième autre véhicule est inférieure à une distance de sécurité de rabattement prédéfinie ou si une décélération du deuxième autre véhicule est supérieure à un seuil de décélération prédéfini.

Selon une variante de réalisation compatible avec les variantes de réalisation précédentes, l'étape de réalisation de la manœuvre de dépassement ou l'étape de réalisation de la manœuvre de rabattement est mise en œuvre automatiquement par une fonction de contrôle du positionnement du véhicule dans la voie implémentée sur ledit véhicule.

Ainsi, la manœuvre de dépassement ou de rabattement est réalisée automatiquement, sans intervention du conducteur, via des fonctions de sécurité implémentées sur le véhicule.

Selon une variante de réalisation compatible avec les variantes de réalisation précédentes, le procédé selon le deuxième aspect de l'invention comporte en outre, si le deuxième ensemble de conditions est rempli, une étape d'émission d'un message à l'intention du conducteur dudit véhicule, informant que la manœuvre de dépassement peut être réalisée de manière sécurisée et/ou donnant des informations sur la manœuvre de dépassement à réaliser ou, si le troisième ensemble de conditions est rempli, une étape d'émission d'un message à l'intention du conducteur dudit véhicule, informant que la manœuvre de rabattement peut être réalisée de manière sécurisée et/ou donnant des informations sur la manœuvre de rabattement à réaliser.

Un troisième aspect de l'invention concerne un véhicule comportant des moyens pour mettre en œuvre le procédé selon le premier ou le deuxième aspect de l'invention.

Un quatrième aspect de l'invention concerne un produit programme d'ordinateur comprenant des instructions qui, lorsque le programme est exécuté par un ordinateur, conduisent celui-ci à mettre en œuvre les étapes du procédé selon le premier ou le deuxième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon un premier aspect de l'invention.
- La figure 2 montre une représentation schématique d'une première étape du procédé selon le premier aspect de l'invention.
- La figure 3 est un schéma synoptique illustrant l'enchaînement des étapes d'un procédé selon un deuxième aspect de l'invention.
- La figure 4 montre une représentation schématique d'une troisième étape du procédé selon le deuxième aspect de l'invention.

### DESCRIPTION DETAILLEE

Sauf précision contraire, un même élément apparaissant sur des figures différentes présente une référence unique.

Un premier aspect de l'invention concerne un procédé permettant à un véhicule de changer de voie de circulation de manière sécurisée, c'est-à-dire permettant la réalisation d'une manœuvre de changement de voie par le véhicule, qui limite les risques pour le conducteur du véhicule.

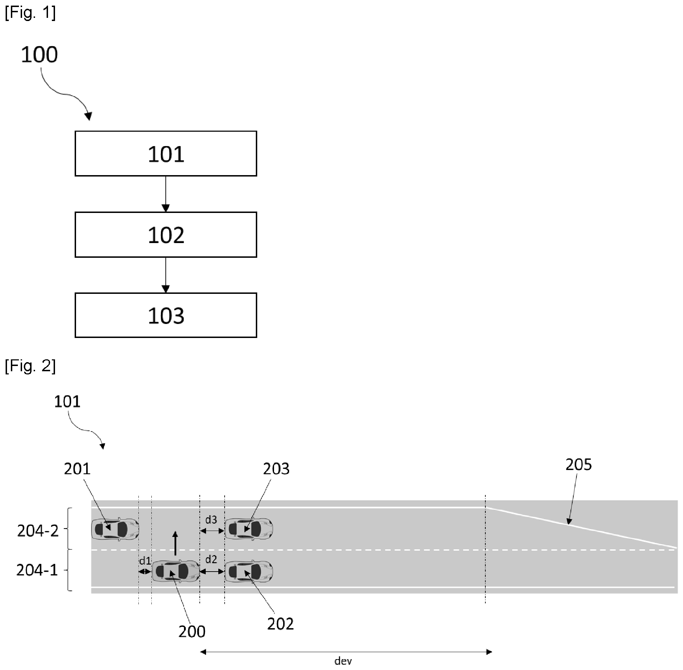

Comme illustré sur la figure 2, le véhicule 200 est initialement sur une première voie de circulation 204-1, et la réalisation de la manœuvre de changement de voie permettrait au véhicule 200 de passer de la première voie de circulation 204-1 à une deuxième voie de circulation 204-2.

La deuxième voie de circulation 204-2 est par exemple adjacente à la première voie de circulation 204-1.

La manœuvre de changement de voie comporte une première phase consistant pour le véhicule 200, à accélérer pour se placer au moins à une distance de sécurité de manœuvre prédéfinie d'un premier autre véhicule 201 tout en maintenant au moins une distance de sécurité finale prédéfinie avec un deuxième autre véhicule 202.

Le premier autre véhicule se définit comme le véhicule le plus proche du véhicule 200 situé dans la deuxième voie de circulation 204-2 et derrière le véhicule 200.

Le deuxième autre véhicule se définit comme le véhicule le plus proche du véhicule 200 situé dans la première voie de circulation 204-1 et devant le véhicule 200.

On entend par « un premier véhicule se situe derrière un deuxième véhicule », que le parechoc avant du premier véhicule est situé derrière le parechoc arrière du deuxième véhicule par rapport au sens de circulation.

On entend par « un premier véhicule se situe devant un deuxième véhicule », que le parechoc arrière du premier véhicule est situé devant le parechoc avant du deuxième véhicule par rapport au sens de circulation.

La distance de sécurité de manœuvre prédéfinie est par exemple définie par la réglementation relative au changement de voie et dépend par exemple de la vitesse du véhicule 200 et de la différence de vitesses entre le véhicule 200 et le premier autre véhicule 201.

La distance de sécurité finale prédéfinie est par exemple égale à une vitesse actuelle du véhicule 200 multipliée par un premier coefficient, la valeur du premier coefficient étant par exemple comprise entre 1 et 3.

La manœuvre de changement de voie comporte ensuite une deuxième phase consistant pour le véhicule 200, à passer de la première voie de circulation 204-1 à la deuxième voie de circulation 204-2.

L'enchaînement des étapes du procédé 100 selon le premier aspect de l'invention est illustré sur la figure 1.

Une première étape 101 du procédé 100 selon le premier aspect de l'invention consiste à vérifier qu'un premier ensemble de conditions permettant le changement de voie sécurisé du véhicule 200 s'applique.

Le premier ensemble de conditions comporte un premier sous-ensemble de conditions et un deuxième sous-ensemble de conditions.

Le premier sous-ensemble de conditions comprend au moins une condition relative au véhicule 200 et/ou au moins une condition relative à un environnement actuel du véhicule 200, c'est-à-dire à l'environnement du véhicule 200 au moment de la réalisation de la première étape 101, le véhicule 200 se trouvant alors dans la première voie de circulation 204-1.

Le deuxième sous-ensemble de conditions comprend au moins une condition relative à la manœuvre de changement de voie à réaliser et/ou au moins une condition relative à un environnement estimé du véhicule 200 à l'issue de la première phase de la manœuvre de changement de voie à réaliser, c'est-à-dire à l'environnement dans lequel est estimé que se trouvera le véhicule 200 à l'issue de la première phase de la manœuvre de changement de voie à réaliser.

Le premier ensemble de conditions dépend d'un premier ensemble de paramètres.

Le premier ensemble de paramètres comporte au moins un paramètre lié au véhicule 200, au moins un paramètre lié au premier autre véhicule 201, au moins un paramètre lié au deuxième autre véhicule 202, au moins un paramètre lié à un éventuel troisième autre véhicule 203 se définissant comme le véhicule le plus proche du véhicule 200 situé dans la deuxième voie de circulation 204-2 et devant le véhicule 200 et au moins un paramètre lié à un éventuel événement 205 survenant sur la première voie de circulation 204-1 et/ou sur la deuxième voie de circulation 204-2.

On entend par « éventuel autre véhicule ou événement », qu'un tel autre véhicule ou événement peut ne pas être présent dans l'environnement du véhicule 200. Dans ce cas, tous les paramètres liés à ce dit éventuel autre véhicule ou événement ne sont pas pris en compte.

S'il existe plusieurs événements survenant sur la première voie de circulation 204-1 et/ou sur la deuxième voie de circulation 204-2, on considère l'événement le plus proche du véhicule 200.

L'événement peut être un rétrécissement de voie, une sortie de route prochaine sur un itinéraire entré dans un système de navigation du véhicule 200, un virage, un péage, des travaux ou encore une nouvelle limitation de vitesse.

Sur la figure 2, un premier autre véhicule 201, un deuxième autre véhicule 202, un troisième autre véhicule 203 et un événement 205 de type rétrécissement de voie sont présents dans l'environnement du véhicule 200.

Le premier ensemble de paramètres peut comporter la vitesse actuelle du véhicule 200, une accélération maximale permise pour le véhicule 200, une vitesse relative du premier autre véhicule 201 par rapport au véhicule 200, une vitesse relative du deuxième autre véhicule 202 par rapport au véhicule 200, une vitesse relative du troisième autre véhicule 203 par rapport au véhicule 200, une distance d1 entre le premier autre véhicule 201 et le véhicule 200, une distance d2 entre le deuxième autre véhicule 202 et le véhicule 200, une distance d3 entre le troisième autre véhicule 203 et le véhicule 200, une vitesse maximale autorisée sur la première voie de circulation 204-1 et/ou sur la deuxième voie de circulation 204-2, une longueur du deuxième autre véhicule 202 et/ou une distance dev entre le véhicule 200 et l'événement 205.

La longueur du deuxième autre véhicule 202 dépend par exemple du type du deuxième véhicule 202 pouvant par exemple être choisi parmi une pluralité de types comportant par exemple les types voiture, camion, moto.

L'accélération maximale permise pour le véhicule 200 est une donnée propre au véhicule 200 rendue accessible par son constructeur, et qui dépend de la vitesse actuelle du véhicule 200.

Le premier sous-ensemble de conditions comporte par exemple une condition selon laquelle le deuxième autre véhicule 202 ne ralentit pas, et/ou une condition selon laquelle le troisième autre véhicule 203 ne ralentit pas, et/ou une condition selon laquelle la distance d2 entre le deuxième autre véhicule 202 et le véhicule 200 est supérieure à une distance de sécurité initiale prédéfinie, et/ou une condition selon laquelle la distance d3 entre le troisième autre véhicule 203 et le véhicule 200 est supérieure à la distance de sécurité initiale prédéfinie.

La distance de sécurité initiale prédéfinie est par exemple égale à la vitesse actuelle du véhicule 200 multiplié par un deuxième coefficient, la valeur du deuxième coefficient étant par exemple comprise entre 1 et 3.

Le deuxième sous-ensemble de conditions comporte par exemple une condition selon laquelle un temps de placement sécurisé est inférieur à un seuil de temps prédéfini, et/ou une condition selon laquelle une vitesse maximale de placement sécurisé est supérieure à une vitesse maximale autorisée sur la première voie de circulation 204-1 et/ou la deuxième voie de circulation 204-2, et/ou une condition selon laquelle une distance entre le deuxième autre véhicule 202 et le véhicule 200 à l'issue de la première phase de la manœuvre de changement de voie à réaliser est supérieure à la distance de sécurité finale prédéfinie, et/ou une condition selon laquelle une distance entre le troisième autre véhicule 203 et le véhicule 200 à l'issue de la première phase de la manœuvre de changement de voie à réaliser est supérieure à la distance de sécurité finale prédéfinie, et/ou une condition selon laquelle une distance nécessaire à la réalisation de la manœuvre de changement de voie est inférieure à la distance dev entre le véhicule 200 et l'événement 205.

Le temps de placement sécurisé se définit comme le temps minimum nécessaire au véhicule 200 pour se placer dans la première voie de circulation 204-1, de manière à se trouver à la distance de sécurité de manœuvre prédéfinie du premier autre véhicule 201, c'est-à-dire le temps minimum nécessaire pour réaliser la première phase de la manœuvre de changement de voie.

Le seuil de temps prédéfini est par exemple défini selon la réglementation et vaut par exemple 3 secondes.

La vitesse maximale de placement sécurisé se définit comme la vitesse maximale nécessaire au véhicule 200 pour se placer à la distance de sécurité de manœuvre prédéfinie du premier autre véhicule 201 dans le temps de placement sécurisé, c'est-à-dire la vitesse maximale nécessaire pour réaliser la première phase de la manœuvre de changement de voie dans le temps de placement sécurisé.

Le temps de placement sécurisé dépend par exemple de la distance de sécurité de manœuvre prédéfinie, de la vitesse relative du premier autre véhicule 201 par rapport au véhicule 200 et de l'accélération maximale permise pour le véhicule 200.

Le temps de placement sécurisé t vaut par exemple : $t = \frac{{d}_{sec}}{{v}_{201 - 200} + a}$

Avec :
*d_{sec}* : la distance de sécurité de manœuvre prédéfinie ;
*v*₂₀₁₋₂₀₀ : la vitesse relative du premier autre véhicule 201 par rapport au véhicule 200 ;
*a* : l'accélération maximale permise pour le véhicule 200.

La vitesse maximale de placement sécurisé dépend par exemple de la vitesse actuelle du véhicule 200, de l'accélération maximale permise pour le véhicule 200 et du temps de placement sécurisé.

La vitesse maximale de placement sécurisé v vaut par exemple : $v = {v}_{200} + a \times t$

Avec :
*v*₂₀₀ : la vitesse actuelle du véhicule 200 ;
*a* : l'accélération maximale permise pour le véhicule 200 ;
t : le temps de placement sécurisé.

La distance entre le deuxième autre véhicule 202 et le véhicule 200 à l'issue de la première phase de la manœuvre de changement de voie à réaliser dépend par exemple de la distance d2 entre le deuxième autre véhicule 202 et le véhicule 200, de la vitesse relative du deuxième autre véhicule 202 par rapport au véhicule 200 et du temps de placement sécurisé.

La distance d21 entre le deuxième autre véhicule 202 et le véhicule 200 à l'issue de la première phase de la manœuvre de changement de voie à réaliser vaut par exemple : $d 21 = d 2 + \left({v}_{202 - 200}\times t\right)$

Avec :
d2 : la distance entre le deuxième autre véhicule 202 et le véhicule 200 ;
*v*₂₀₂₋₂₀₀ : la vitesse relative du deuxième autre véhicule 202 par rapport au véhicule 200 ;
t : le temps de placement sécurisé.

La distance entre le troisième autre véhicule 203 et le véhicule 200 à l'issue de la première phase de la manœuvre de changement de voie à réaliser dépend par exemple de la distance d3 entre le troisième autre véhicule 203 et le véhicule 200, de la vitesse relative du troisième autre véhicule 203 par rapport au véhicule 200 et du temps de placement sécurisé.

La distance d31 entre le troisième autre véhicule 203 et le véhicule 200 à l'issue de la première phase de la manœuvre de changement de voie à réaliser vaut par exemple : $d 31 = d 3 + \left({v}_{203 - 200}\times t\right)$

Avec :
d3 : la distance entre le deuxième autre véhicule 202 et le véhicule 200 ;
*v*₂₀₃₋₂₀₀ : la vitesse relative du troisième autre véhicule 203 par rapport au véhicule 200 ;
t : le temps de placement sécurisé.

La distance nécessaire à la réalisation de la manœuvre de changement de voie dépend par exemple de la distance d2 entre le deuxième autre véhicule 202 et le véhicule 200, de la distance d21 entre le deuxième autre véhicule 202 et le véhicule 200 à l'issue de la première phase de la manœuvre de changement de voie à réaliser, de la longueur du deuxième autre véhicule 202, de la vitesse relative du deuxième autre véhicule 202 par rapport au véhicule 200, du temps de placement sécurisé et de la vitesse actuelle du véhicule 200.

La distance D nécessaire à la réalisation de la manœuvre de changement de voie vaut par exemple : $D = \left(\frac{d 2 + d 21 + {L}_{202}}{{v}_{202 - 200}}+t\right) \times {v}_{200}$

Avec :
d2 : la distance entre le deuxième autre véhicule 202 et le véhicule 200 ;
d21 : la distance entre le deuxième autre véhicule 202 et le véhicule 200 à l'issue de la première phase de la manœuvre de changement de voie à réaliser ;
*L*₂₀₂ : la longueur du deuxième autre véhicule 202 ;
*v*₂₀₂₋₂₀₀ : la vitesse relative du deuxième autre véhicule 202 par rapport au véhicule 200 ;
t : le temps de placement sécurisé ;
*v*₂₀₀ : la vitesse actuelle du véhicule 200.

Le procédé 100 selon le premier aspect de l'invention peut comporter une deuxième étape 102 consistant à émettre un message à l'intention d'un conducteur du véhicule 200.

L'émission peut consister en l'affichage d'un message sur une interface homme-machine du véhicule 200, par exemple un écran, et/ou en l'émission d'un message vocal via un microphone du véhicule 200.

Le message informe que la manœuvre de changement de voie peut être réalisée de manière sécurisée et/ou comporte des informations sur la manœuvre de changement de voie à réaliser, par exemple sur la zone dans laquelle le véhicule 200 doit se trouver avant d'amorcer le changement de voie.

La deuxième étape 102 n'est réalisée que s'il a été vérifié lors de la première étape 101, que le premier ensemble de conditions est rempli.

Une troisième étape 103 du procédé 100 selon le premier aspect de l'invention consiste pour le véhicule 200, à réaliser la manœuvre de changement de voie.

Selon un premier mode de réalisation, la troisième étape 103 est mise en œuvre automatiquement par une fonction de contrôle du positionnement du véhicule 200 dans la voie, implémentée sur le véhicule 200.

La fonction de contrôle du positionnement du véhicule 200 dans la voie est par exemple la fonction permettant au véhicule 200 d'automatiquement se serrer d'un côté de sa voie pour dégager un espace en interligne dans certaines situations prédéfinies, par exemple pour que des motos ou des véhicules d'urgence puissent passer.

Selon un deuxième mode de réalisation, la troisième étape 103 est mise en œuvre par le conducteur du véhicule 200.

La troisième étape 103 n'est réalisée que s'il a été vérifié lors de la première étape 101, que le premier ensemble de conditions est rempli.

Un deuxième aspect de l'invention concerne un procédé permettant le dépassement sécurisé d'un véhicule cible par le véhicule 200.

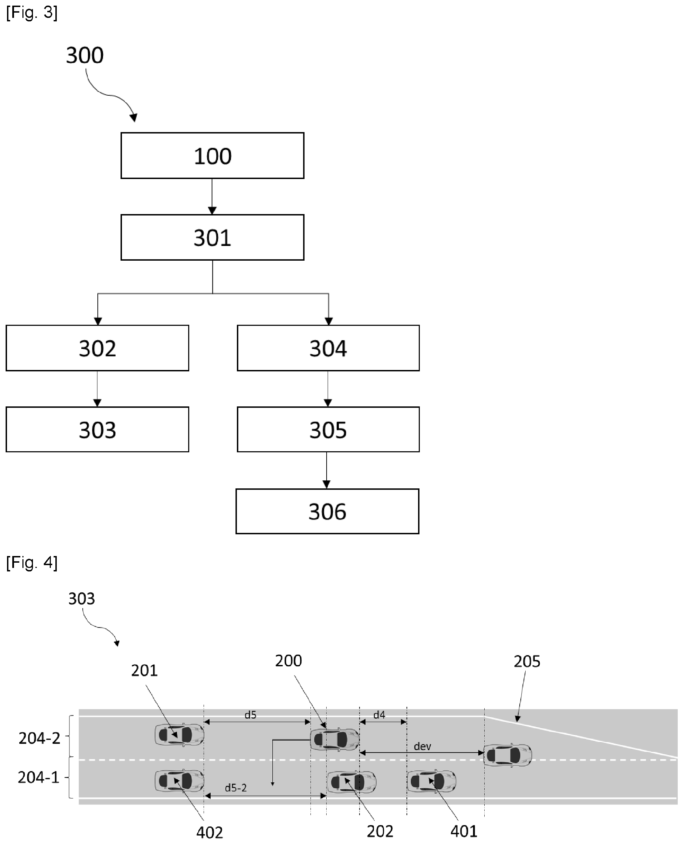

L'enchaînement des étapes du procédé 300 selon le deuxième aspect de l'invention est illustré sur la figure 3.

Le procédé 300 selon le deuxième aspect de l'invention comporte les étapes du procédé 100 selon le premier aspect de l'invention, en considérant le deuxième autre véhicule 202 comme véhicule cible.

Une première étape suivante 301 du procédé 300 selon le deuxième aspect de l'invention consiste à vérifier qu'un deuxième ensemble de conditions permettant le dépassement sécurisé du véhicule 200 s'applique.

Le deuxième ensemble de conditions dépend d'un deuxième ensemble de paramètres.

Le deuxième ensemble de paramètres comporte au moins un paramètre lié au véhicule 200, et/ou au moins un paramètre lié au deuxième autre véhicule 202 et/ou au moins un paramètre lié à un éventuel quatrième autre véhicule 401 se définissant comme le véhicule le plus proche du véhicule 200 situé dans la première voie 204-1 de circulation, devant le deuxième autre véhicule 202 et/ou au moins un paramètre lié à un éventuel événement 205 survenant sur la première voie de circulation 204-1 et/ou sur la deuxième voie de circulation 204-2.

Sur la figure 4, un quatrième autre véhicule 401 et un événement 205 de type rétrécissement de voie sont présents dans l'environnement du véhicule 200.

Le deuxième ensemble de conditions comporte par exemple une condition selon laquelle une distance nécessaire à la réalisation de la manœuvre de dépassement est inférieure à la distance dev entre le véhicule 200 et l'événement 205.

Dans le cas où un quatrième autre véhicule 401 est présent, la distance Dd nécessaire à la réalisation de la manœuvre de dépassement vaut par exemple : $Dd = \left(\frac{d 4 + {L}_{204} + {d}_{sec}}{{v}_{204 - 200}}+tr\right) \times {v}_{200}$

Avec :
d4 : la distance entre le quatrième autre véhicule 401 et le véhicule 200 ;
*L*₂₀₄ la longueur du quatrième autre véhicule 401 ;
*d_{sec}* : la distance de sécurité de manœuvre prédéfinie ;
*v*₂₀₄₋₂₀₀ : la vitesse relative du quatrième autre véhicule 401 par rapport au véhicule 200 ;
tr : un temps nécessaire au rabattement du véhicule 200 prédéfini ;
*v*₂₀₀ : la vitesse actuelle du véhicule 200.

Le temps nécessaire au rabattement du véhicule 200 prédéfini est par exemple de l'ordre de quelques secondes, par exemple égal à 5 secondes.

Dans le cas où un quatrième autre véhicule 401 est absent, la distance Dd nécessaire à la réalisation de la manœuvre de dépassement peut par exemple être calculée de la même manière que précédemment mais en considérant le deuxième autre véhicule 202 à la place du quatrième autre véhicule 401.

Le procédé 300 selon le deuxième aspect de l'invention peut comporter une deuxième étape suivante 302 consistant à émettre un message à l'intention d'un conducteur du véhicule 200.

Le message informe que la manœuvre de dépassement peut être réalisée de manière sécurisée et/ou comporte des informations sur la manœuvre de dépassement à réaliser, par exemple sur la zone dans laquelle le véhicule 200 doit se trouver avant d'amorcer le dépassement et/ou la vitesse minimale requise pour le véhicule 200.

La deuxième étape suivante 302 n'est réalisée que s'il a été vérifié lors de la première étape suivante 301, que le deuxième ensemble de conditions est rempli.

Une troisième étape suivante 303 du procédé 100 selon le deuxième aspect de l'invention consiste pour le véhicule 200, à réaliser la manœuvre de dépassement.

Selon un premier mode de réalisation, la troisième étape suivante 303 est mise en œuvre automatiquement par la fonction de contrôle du positionnement du véhicule 200 dans la voie, implémentée sur le véhicule 200.

Selon un deuxième mode de réalisation, la troisième étape suivante 303 est mise en œuvre par le conducteur du véhicule 200.

La troisième étape suivante 303 n'est réalisée que s'il a été vérifié lors de la première étape suivante 301, que le deuxième ensemble de conditions est rempli.

Une quatrième étape suivante 304 du procédé 300 selon le deuxième aspect de l'invention consiste à vérifier qu'un troisième ensemble de conditions permettant un rabattement sécurisé du véhicule 200 s'applique.

Le troisième ensemble de conditions dépend d'un troisième ensemble de paramètres.

Le troisième ensemble de paramètres comporte au moins un paramètre lié au véhicule 200, et/ou au moins un paramètre lié au deuxième autre véhicule 202 et/ou au moins un paramètre lié à un éventuel cinquième autre véhicule 402 se définissant comme le véhicule le plus proche du véhicule 200 situé dans la première voie 204-1 derrière le deuxième autre véhicule 202.

La quatrième étape suivante 304 n'est réalisée que s'il a été vérifié lors de la première étape 301, que le deuxième ensemble de conditions n'est pas rempli.

Le troisième ensemble de conditions comporte par exemple une condition selon laquelle une distance d5-2 entre le deuxième autre véhicule 202 et le cinquième autre véhicule 402 est supérieure à une distance de sécurité de rabattement prédéfinie, et/ou une condition selon laquelle une décélération du deuxième autre véhicule 202 est inférieure à un seuil de décélération prédéfini.

Le seuil de décélération prédéfini est par exemple compris entre 2 et 5 m/s².

La distance de sécurité de rabattement prédéfinie dépend par exemple de la distance d5 entre le cinquième autre véhicule 402 et le véhicule 200, de la distance de sécurité initiale prédéfinie et de la longueur du véhicule 200.

La distance de sécurité de rabattement prédéfinie dr vaut par exemple : $dr = d 5 + ds + {L}_{200}$

Avec :
d5 : la distance entre le cinquième autre véhicule 402 et le véhicule 200 ;
ds : la distance de sécurité initiale prédéfinie ;
*L*₂₀₀ : la longueur du véhicule 200.

Le procédé 300 selon le deuxième aspect de l'invention peut comporter une cinquième étape suivante 305 consistant à émettre un message à l'intention du conducteur du véhicule 200.

Le message informe que la manœuvre de rabattement peut être réalisée de manière sécurisée et/ou comporte des informations sur la manœuvre de rabattement à réaliser, par exemple sur la zone dans laquelle le véhicule 200 doit se trouver avant d'amorcer le rabattement.

La cinquième étape suivante 305 n'est réalisée que s'il a été vérifié lors de la quatrième étape suivante 304, que le troisième ensemble de conditions est rempli.

Une sixième étape suivante 306 du procédé 100 selon le deuxième aspect de l'invention consiste pour le véhicule 200, à réaliser la manœuvre de rabattement.

Selon un premier mode de réalisation, la sixième étape suivante 306 est mise en œuvre automatiquement par la fonction de contrôle du positionnement du véhicule 200 dans la voie, implémentée sur le véhicule 200.

Selon un deuxième mode de réalisation, la sixième étape suivante 306 est mise en œuvre par le conducteur du véhicule 200.

La sixième étape suivante 306 n'est réalisée que s'il a été vérifié lors de la quatrième étape suivante 304, que le troisième ensemble de conditions est rempli.

## Revendications

1. Procédé (300) de réalisation d'une manœuvre de dépassement sécurisée d'un véhicule cible mis en œuvre par un véhicule (200) situé dans une première voie (204-1) de circulation, la manœuvre comportant une première phase pendant laquelle ledit véhicule (200) accélère pour se placer au moins à une distance de sécurité de manœuvre prédéfinie d'un premier autre véhicule (201) situé dans une deuxième voie (204-2) de circulation et arrivant par l'arrière dudit véhicule (200) tout en conservant au moins une distance de sécurité finale prédéfinie avec un deuxième autre véhicule (202) situé dans la première voie (204-1) et devant ledit véhicule (200), le véhicule cible correspondant au deuxième autre véhicule (202), et une deuxième phase pendant laquelle ledit véhicule (200) passe de la première voie (204-1) à la deuxième voie (204-2), le procédé (100) comportant les étapes suivantes :
- Vérification (101) qu'un premier ensemble de conditions permettant une manœuvre de changement de voie sécurisée est rempli, le premier ensemble de conditions comportant un premier sous-ensemble de conditions relatives audit véhicule (200) et à un environnement actuel dudit véhicule (200) et un deuxième sous-ensemble de conditions relatives à la manœuvre de changement de voie à réaliser et à un environnement estimé dudit véhicule (200) à l'issue de la première phase de la manœuvre de changement de voie à réaliser, le premier ensemble de conditions dépendant d'un premier ensemble de paramètres liés :
- audit véhicule (200) ;
- au premier autre véhicule (201) ;
- au deuxième autre véhicule (202) ;
- à un éventuel troisième autre véhicule (203) situé dans la deuxième voie (204-2) et devant ledit véhicule (200) ; et
- à un éventuel événement (205) survenant sur la première voie (204-1) et/ou la deuxième voie (204-2) ;
- Si le premier ensemble de conditions est rempli, réalisation (102) de la manœuvre de changement de voie par ledit véhicule (200) ;
- Vérification (301) qu'un deuxième ensemble de conditions permettant un dépassement sécurisé est rempli, le deuxième ensemble de conditions dépendant d'un deuxième ensemble de paramètres liés audit véhicule (200), au deuxième autre véhicule (202), à un éventuel quatrième autre véhicule (401) situé dans la première voie (204-1) devant le deuxième autre véhicule (202) et à l'éventuel événement (205) ;
- Si le deuxième ensemble de conditions est rempli, réalisation (303) par ledit véhicule (200), d'une manœuvre de dépassement du deuxième autre véhicule (202) ;
- Si le deuxième ensemble de conditions n'est pas rempli, vérification (304) qu'un troisième ensemble de conditions permettant une manœuvre de rabattement sécurisée dudit véhicule (200) est rempli, le troisième ensemble de conditions dépendant d'un troisième ensemble de paramètres liés audit véhicule (200), au deuxième autre véhicule (202) et à un éventuel cinquième autre véhicule (402) situé dans la première voie (204-1) derrière le deuxième autre véhicule (202) ;
- Si le troisième ensemble de conditions est rempli, réalisation (306) par ledit véhicule (200), d'une manœuvre de rabattement derrière le deuxième autre véhicule (202).

2. Procédé (300) selon la revendication précédente, dans lequel le premier ensemble de paramètres comporte une vitesse actuelle dudit véhicule (200), une accélération maximale permise pour ledit véhicule (200), une vitesse relative du premier autre véhicule (201) par rapport audit véhicule (200), une vitesse relative du deuxième autre véhicule (202) par rapport audit véhicule (200), une vitesse relative de l'éventuel troisième autre véhicule (203) par rapport audit véhicule (200), une distance (d1) entre le premier autre véhicule (201) et ledit véhicule (200), une distance (d2) entre le deuxième autre véhicule (202) et ledit véhicule (200), une distance (d3) entre l'éventuel troisième autre véhicule (203) et ledit véhicule (200), une vitesse maximale autorisée, une longueur du deuxième autre véhicule (202) et/ou une distance (dev) entre ledit véhicule (200) et l'éventuel événement (205).

3. Procédé (300) selon la revendication précédente, dans lequel le premier sous-ensemble de conditions n'est pas vérifié si le deuxième autre véhicule (202) ou l'éventuel troisième autre véhicule (203) ralentit, ou si la distance (d2) entre le deuxième autre véhicule (202) et ledit véhicule (200) ou la distance (d3) entre l'éventuel troisième autre véhicule (203) et ledit véhicule (200) est inférieure à une distance de sécurité initiale prédéfinie, et le deuxième sous-ensemble de conditions n'est pas vérifié si un temps de placement sécurisé correspondant au temps minimum nécessaire audit véhicule (200) pour réaliser la première phase de la manœuvre de changement de voie est supérieur à un seuil de temps prédéfini, si une vitesse maximale de placement sécurisé correspondant à la vitesse maximale nécessaire audit véhicule (200) pour réaliser la première phase de la manœuvre de changement de voie dans le temps de placement sécurisé est supérieure à une vitesse maximale autorisée, si une distance entre le deuxième autre véhicule (202) et ledit véhicule (200) ou une distance entre l'éventuel troisième autre véhicule (203) et ledit véhicule (200) est inférieure à la distance de sécurité finale prédéfinie une fois que ledit véhicule (200) a réalisé la première phase de la manœuvre de changement de voie, ou si une distance nécessaire à la réalisation de la manœuvre de changement de voie est supérieure à la distance (dev) entre ledit véhicule (200) et l'éventuel événement (205).

4. Procédé (300) selon l'une quelconque des revendications précédentes, dans lequel l'étape (102) de réalisation de la manœuvre de changement de voie est mise en œuvre automatiquement par une fonction de contrôle du positionnement du véhicule (200) dans la voie implémentée sur ledit véhicule (200).

5. Procédé (300) selon l'une quelconque des revendications précédentes, comportant en outre si le premier ensemble de conditions est rempli, une étape (102) d'émission d'un message à l'attention d'un conducteur dudit véhicule (200), informant que la manœuvre de changement de voie peut être réalisée de manière sécurisée et/ou donnant des informations sur la manœuvre de changement de voie à réaliser.

6. Procédé (300) selon l'une quelconque des revendications précédentes, dans lequel le deuxième ensemble de conditions n'est pas rempli si une distance nécessaire à la réalisation de la manœuvre de dépassement est supérieure à la distance (dev) entre ledit véhicule (200) et l'éventuel événement (205).

7. Procédé (300) selon l'une quelconque des revendications précédentes, dans lequel le troisième ensemble de conditions n'est pas rempli si une distance (d5-2) entre le deuxième autre véhicule (202) et l'éventuel cinquième autre véhicule (402) est inférieure à une distance de sécurité de rabattement prédéfinie ou si une décélération du deuxième autre véhicule (202) est supérieure à un seuil de décélération prédéfini.

8. Procédé (300) selon l'une quelconque des revendications précédentes, dans lequel l'étape (303) de réalisation de la manœuvre de dépassement ou l'étape (306) de réalisation de la manœuvre de rabattement est mise en œuvre automatiquement par une fonction de contrôle du positionnement du véhicule (200) dans la voie implémentée sur ledit véhicule (200).

9. Procédé (300) selon l'une quelconque des revendications précédentes, comportant en outre, si le deuxième ensemble de conditions est rempli, une étape (302) d'émission d'un message à l'attention du conducteur dudit véhicule (200), informant que la manœuvre de dépassement peut être réalisée de manière sécurisée et/ou donnant des informations sur la manœuvre de dépassement à réaliser ou, si le troisième ensemble de conditions est rempli, une étape (305) d'émission d'un message à l'attention du conducteur dudit véhicule (200), informant que la manœuvre de rabattement peut être réalisée de manière sécurisée et/ou donnant des informations sur la manœuvre de rabattement à réaliser.

10. Véhicule (200) comportant des moyens pour mettre en œuvre le procédé (300) selon l'une quelconque des revendications précédentes.
